# EUROPEAN PATENT APPLICATION

(11) **EP 1 641 168 A1**
(43) Date of publication of application: **29.03.2006**
(21) Application number: 04747704.7
(22) Date of filing: 12.07.2004
(51) Int. Cl.: H04L 1/16

(54) **BASE STATION DEVICE AND TRANSMISSION METHOD**

(30) Priority: 18.07.2003 JP 2003276974
(71) Applicant: MATSUSHITA ELECTRIC INDUSTRIAL CO., LTD., Kadoma-shi, Osaka 571-8501 (JP)
(72) Inventor: FUKUI, Akito, Kanagawa 233-0003 (JP); IIDA, Kenichiro, Kanagawa 244-0804 (JP); ISHIMORI, Takayuki, Kanagawa 233-0002 (JP)
(74) Representative: Grünecker, Kinkeldey, Stockmair & Schwanhäusser Anwaltssozietät
(86) International application number: PCT/JP2004/010240
(87) International publication number: WO 2005/008946

(57) **Abstract**

RLC processing section 106 supplies packet data requested for retransmission from a mobile terminal and new packet data not requested for retransmission to buffer 107 corresponding to data amounts controlled in HS-DSCH/FP processing section 108. Buffer 107 temporarily stores the packet data requested for retransmission and the new packet data not requested for retransmission to output at predetermined timing. HS-DSCH/FP processing section 108 detects a receivable data amount of the mobile terminal using CQI, and controls RLC processing section 106 so that the amount of data stored of packet data in buffer 107 does not exceed the receivable data amount of the mobile terminal. It is thereby possible to decrease the number of retransmissions to improve the throughput, and prevent suspension of the communication and disconnection of the channel.

## Description

### Technical Field

The present invention relates to a base station apparatus and a transmission method. More particularly, the present invention relates to a base station apparatus and transmission method using an automatic repeat request system to recover a loss of a packet on a radio channel by retransmission of the packet.

### Background Art

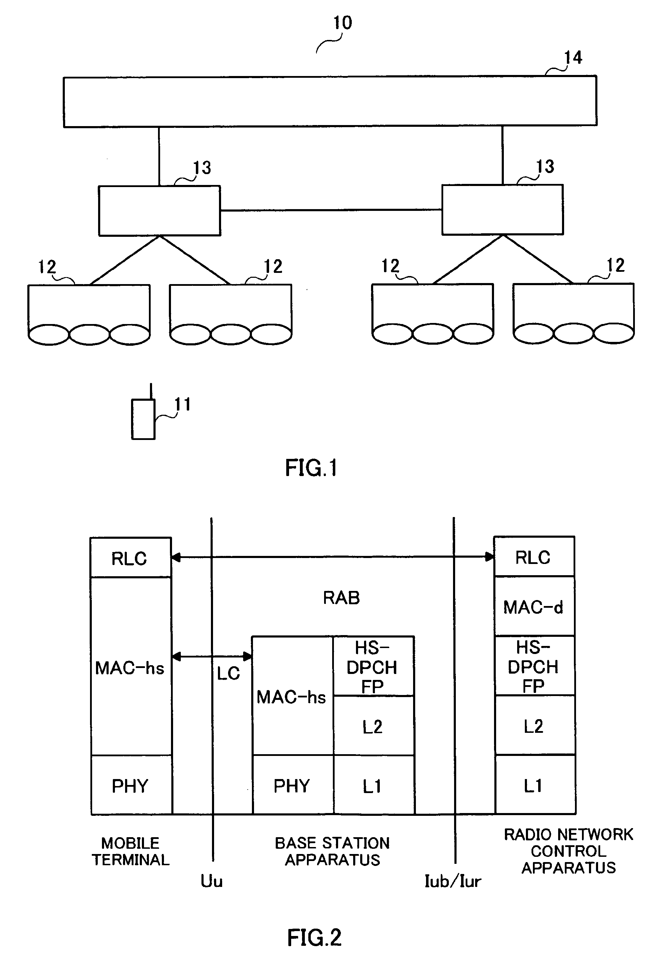

As shown in FIG.1, mobile communication system 10 is comprised of mobile terminals 11, base station apparatuses 12, radio network control apparatuses 13 that control a plurality of base station apparatuses 12, and core network 14 that performs position management, call connection control and the like for the mobile terminals 11.

HSDPA (High Speed Downlink Packet Access) techniques being standardized in 3GPP (3rd Generation Partnership Project) are applied to wireless transmission between mobile terminals 11 and base station apparatuses 12.

HSDPA is new techniques whose standardization has proceeded in 3GPP, and achieves high-speed transmission on the downlink radio channel from base station apparatus 12 to mobile terminal 11 by applying an adaptive modulation system, hybrid ARQ (HARQ) system, fast selection of a communication destination user, and methods of changing transmission parameters adaptively corresponding to the status of the radio channel and the like to wireless interfaces.

Further, HSDPA is such a system that a plurality of mobile terminals 11 shares one radio channel to perform data transfer, and a best effort type communication form. More specifically, each mobile terminal 11 reports a channel state of the downlink radio channel to base station apparatus 12, and base station apparatus 12 performs scheduling of the transmission order of data to the plurality of mobile terminals 11, and transmits the data to mobile terminals 11.

FIG.2 illustrates a protocol configuration of user plane when HSDPA is applied. MAC-hs (Medium Access Control used for high speed) is to perform processing of the HARQ system, scheduling and the like, and installed in mobile terminals 11 and base station apparatuses 12. Further, an RLC (Radio Link Control) protocol that is a selective retransmission type of retransmission control protocol is installed higher than MAC-hs.

HS-DSCH/FP (High Speed Downlink Shared Channel Frame Protocol) is further installed for flow control between a MAC-hs processing section of base station apparatus 12 and an RLC processing section of radio network control apparatus 13. The flow control controls the amount of packets transmitted and received between base station apparatus 12 and radio network control apparatus 13. More specifically, radio network control apparatus 13 reports to base station apparatus 12 a capacity request message setting the amount of packets to transmit, and base station apparatus 12 reports to radio network control apparatus 13 a capacity allocation message setting the amount of packets allowed to be transmitted. In addition, based on the use amount of the buffer of the node of the apparatus 12, base station apparatus 12 may report to radio network control apparatus 13 a capacity allocation message without receiving a capacity request message from radio network control apparatus 13, and control the amount of transmission packets from radio network control apparatus 13.

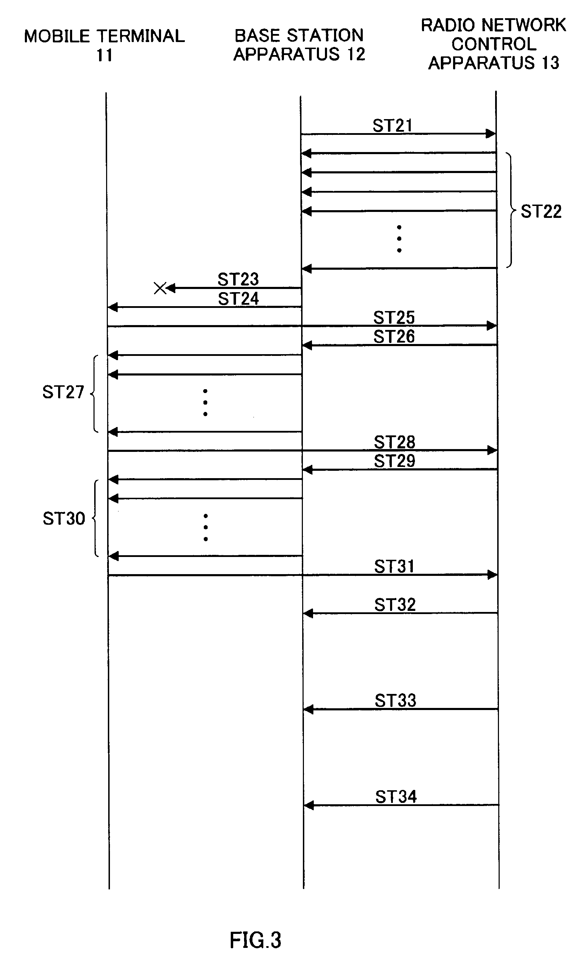

The operation in mobile communication system 10 will be described below with reference to FIG.3. FIG.3 is a sequence diagram illustrating the operation in mobile communication system 10.

When an HS-DSCH/FP processing section of base station apparatus 12 confirms that the amount of data stored in the buffer of the MAC-hs processing section does not exceed a threshold, the HS-DSCH/FP processing section transmits a capacity allocation message to permit transmission of AMD-PDU to radio network control apparatus 13 (step ST21).

Upon receiving the capacity allocation message, the RLC processing section of radio network control apparatus 13 transmits AMD-PDUs0~127 to base station apparatus 12 (step ST22).

AMD-PDUs 0~127 transmitted from the RLC processing section of radio network control apparatus 13 are stored in the buffer in the MAC-hs processing section in base station apparatus 12. Then, according to the scheduling in the MAC-hs processing section, the AMD-PDUs stored in the buffer of base station apparatus 12 are sequentially transmitted to mobile terminal 11. At this point, it is assumed that AMD-PDUO is discarded by error on the radio channel (step ST23) .

Upon receiving next AMD-PDU1 (step ST24), an RLC processing section of mobile terminal 11 detects the discarding of AMD-PDUO from the sequence number set in the AMD-PDU. Then, the RLC processing section of mobile terminal 11 transmits STATUS-PDUO to request for retransmission of AMD-PDUO to the RLC processing section of radio network control apparatus 13 (step ST25).

At the same time, mobile terminal 11 starts up Timer_Status_Prohibit to limit the transmission interval of STATUS-PDU. Upon receiving the STATUS-PDU0, the RLC processing section in radio network control apparatus 13 increments VT (DAT) to "1" (VT (DAT) =1), and retransmits AMD-PDUO to base station apparatus 12 (step ST26).

The AMD-PDUO is stored in the buffer in the MAC-hs processing section in base station apparatus 12 but is not immediately transmitted to mobile terminal 11, because not all of previously stored AMD-PDUs1~127 have not been transmitted yet. Base station apparatus 12 transmits the AMD-PDUs1~127 stored in the buffer to the RLC processing section of mobile terminal 11 until the AMD-PDUO retransmitted from the RLC processing section of radio network control apparatus 13 is transmitted to the RLC processing section of mobile terminal 11 (step ST27).

Since the AMD-PDUO whose retransmission has been requested is not received when Timer_Status_Prohibit expires, the RLC processing section of mobile terminal 11 transmits STATUS-PDU1 to request again for retransmission of AMD-PDUO to the RLC processing section of radio network control apparatus 13 (step ST28).

Upon receiving STATUS-PDU1, the RLC processing section in radio network control apparatus 13 increments VT(DAT) to "2" (VT (DAT)=2), and retransmits again AMD-PDUO to base station apparatus 12 (step ST29).

However, AMD-PDUO is stored in the buffer in the MAC-hs processing section in base station apparatus 12, but not transmitted immediately to mobile terminal 11 because all of AMD-PDUs 1~127 stored previously are not transmitted yet. Base station apparatus 12 transmits the AMD-PDUs1~127 stored in the buffer to the RLC processing section of mobile terminal 11 until the AMD-PDUO retransmitted from the RLC processing section of radio network control apparatus 13 is transmitted to the RLC processing section of mobile terminal 11 (step ST30).

Since AMD-PDUO whose retransmission has been requested is not received when Timer_Status_Prohibit expires, the RLC processing section of mobile terminal 11 transmits STATUS-PDU2 to request again for retransmission of AMD-PDUO to the RLC processing section of radio network control apparatus 13 (step ST31).

Subsequently, the operation of steps ST25 to ST30 is thus repeated. Whenever the RLC processing section of radio network control apparatus 13 receives a STATUS-PDU with a request for retransmission of the same AMD-PDU, i.e. AMD-PDUO, the RLC processing section increments VT (DAT) , and when the value of VT (DAT) reaches MaxDAT, starts up process of resetting the RLC protocol to transmit a RESET-PDU to base station apparatus 12 (step ST32).

By this means, the RLC protocol in mobile terminal 11 and radio network control apparatus 13 is initialized, and the data stored in the RLC processing section is all discarded. Further, when the RESET-PDU transmitted from the RLC processing of radio network control apparatus 13 does not immediately arrive at the RLC processing section of mobile terminal 11 by delay in the buffer in the MAC-hs, the RLC processing section of radio network control apparatus 13 retransmits the RESET-PDU every time Timer_RST expires (steps ST33 and ST34).

The RLC processing section of radio network control apparatus 13 increments VT(RST) whenever transmitting the RESET-PDU, and when a value of VT (RST) reaches MaxRST, judges as an error on the radio channel and reports the event to an RRC (Radio Resource Control) processing section. Then, the RRC processing section starts up the process of disconnecting the radio channel used by the mobile station 11.

In the case where transmission between the base station apparatus and mobile terminal is performed, for example, on a best-effort basis, many AMD-PDUs are stored in the buffer in the MAC-hs processing section of the base station apparatus when the transmission data rate decreases, and some AMD-PDU is discarded by an overflow of the buffer. Further, an AMD-PDU may be discarded by transmission error between the base station apparatus and mobile terminal. When an AMD-PDU is discarded, the discarded AMD-PDU is retransmitted between the RLC processing section of the radio network control apparatus and the RLC processing section of the mobile terminal. However, when many AMD-PDUs are stored in the buffer in the MAC-hs processing section, the retransmitted AMD-PDU needs to wait long in the buffer, and does not immediately arrive at the RLC processing section of the mobile terminal. Therefore, the RLC processing section of the radio network control apparatus repeats retransmission of the same AMD-PDU, and there arises a problem of decrease in throughput.

Then, when the number of retransmissions reaches a predetermined threshold, the RLC processing section of the mobile terminal discards all the stored data, while the RLC processing section of the radio network control apparatus also discards all the stored data, and this gives another problem that the communication is disrupted.

Further, when the number of times the RESET message is transmitted from the RLC processing section of the radio network control apparatus reaches a predetermined threshold due to an increased number of retransmissions, the RRC processing section starts up the process of disconnecting the radio channel used by the mobile terminal in response to a report from the RLC processing section, the radio channel used by the mobile terminal is thereby disconnected, and another problem further occurs that the mobile terminal cannot receive the service being used by the terminal.

### Disclosure of Invention

It is therefore an object of the present invention to provide a base station apparatus and transmission method for controlling the amount of transmission packet data requested for retransmission and stored in a buffer, thereby improving throughput and preventing disruption of communication and channel disconnections.

When a communication terminal apparatus sends a retransmission request, the above-noted object is achieved by adjusting the amount of data multiplexed, between transmission packet data requested for retransmission and new transmission packet data not requested for retransmission based on reception quality information (CQI: Channel Quality of Indicator) of the communication terminal apparatus contained in a received signal, and storing data in a buffer accordingly.

### Brief Description of Drawings

FIG.1 is a diagram illustrating an entire conventional communication system;
FIG.2 is a diagram of a conventional protocol configuration;
FIG.3 is a sequence diagram illustrating the operation in the conventional communication system;
FIG.4 is a block diagram illustrating a configuration of a base station apparatus according to Embodiment 1 of the invention;
FIG.5 is a block diagram illustrating a configuration of a mobile terminal apparatus according to Embodiment 1 of the invention;
FIG.6 is a block diagram illustrating a configuration of an HS-DSCH/FP processing section according to Embodiment 1 of the invention;
FIG.7 is a block diagram illustrating a configuration of an RLC processing section according to Embodiment 1 of the invention;
FIG.8 is a view showing a reference table indicating the relationship between CQI and the amount of receivable data according to Embodiment 1 of the invention;
FIG.9 is a diagram of a protocol configuration according to Embodiment 1 of the invention;
FIG.10 is a sequence diagram illustrating the operation in the communication system according to Embodiment 1 of the invention;
FIG.11 is a block diagram illustrating a configuration of an HS-DSCH/FP processing section according to Embodiment 2 of the invention;
FIG.12 is a block diagram illustrating a configuration of a base station apparatus according to Embodiment 3 of the invention; and
FIG.13 is a sequence diagram illustrating the operation in a communication system according to Embodiment 3 of the invention.

### Best Mode for Carrying Out the Invention

Embodiments of the present invention will specifically be described below with reference to the accompanying drawings.

### (Embodiment 1)

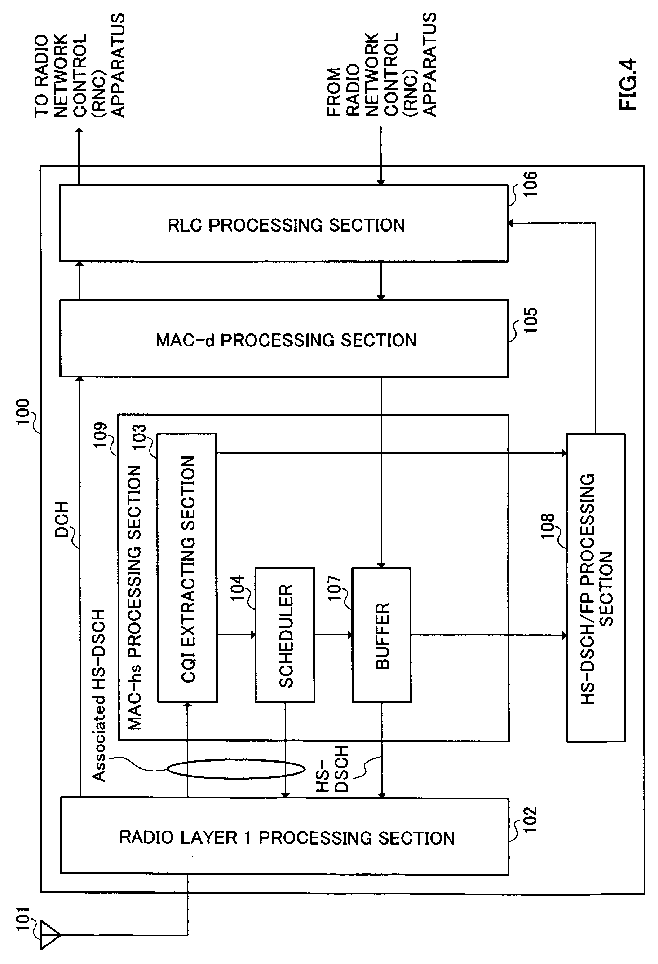

A configuration of base station apparatus 100 according to Embodiment 1 of the invention will be first described below with reference to FIG. 4. FIG. 4 is a block diagram illustrating the configuration of base station apparatus 100 according to Embodiment 1 of the invention.

MAC-hs processing section 109 is comprised of CQI extracting section 103, scheduler 104 and buffer 107.

Radio layer 1 processing section 102 performs radio signal processing on a received signal received in antenna 101 to output to CQI extracting section 103 and MAC-d (Medium Access Control used for dedicated) processing section 105. Radio layer 1 processing section 102 further performs radio signal processing on scheduling information input from scheduler 104 to transmit from antenna 101, while performing radio processing on high-speed packet communication data input from buffer 107 to transmit from antenna 101.

CQI extracting section 103 extracts a CQI that is reception quality information included in the received signal input from radio layer 1 processing section 102 to output to scheduler 104 and HS-DSCH/FP processing section 108. The CQI is the reception quality information of a communication terminal apparatus and transmitted from the communication terminal apparatus to base station apparatus. Scheduler 104 that is transmission means holds a reference table storing modulation scheme information that associates the modulation scheme such as 16QAM with CQI, and another reference table storing coding rate information that associates the coding rate withCQI. Each of communication terminal apparatuses and base station apparatus has the same reference table storing the modulation scheme information and the same reference table storing the coding rate information. Then, scheduler 104 refers to the reference tables using the CQI input from CQI extracting section 103, thereby determines transmission parameters such as a modulation scheme and coding rate, and further determines a communication terminal apparatus to which packet data is transmitted on a predetermined time basis (generally, referred to as "scheduling"). Scheduler 104 outputs thus determined scheduling information of transmission parameters and the like to buffer 107 and radio layer 1 processing section 102.

MAC-d processing section 105 performs MAC-d processing on the received signal input from radio layer 1 processing section 102 to output to RLC processing section 106. Further, MAC-d processing section 105 performs MAC-d processing on transmission packet data input from RLC processing section 106, while adding a MAC-d header, and outputs the packet to buffer 107. In addition, details of the MAC-d processing are described in 3GPP, TS25.321 Medium Access Control (MAC) protocol specification, V3.14.0.

RLC processing section 106 that is retransmission control means performs RLC processing on the received signal input from MAC-d processing section 105 to output to a radio network control (RNC) apparatus. Further, RLC processing section 106 has the function of performing retransmission control of data based on a selective retransmission type of retransmission control protocol, and performs the RLC processing in response to a retransmission request from a communication terminal apparatus contained in the received signal. In the RLC processing of the selective retransmission type of retransmission control protocol performed in RLC processing section 106, based on ACK or NACK (Negative ACKnowledgement) reported from the communication terminal apparatus, RLC processing section 106 selects packet data (transmission packet data to be retransmitted) reported as NACK from among transmitted packet data. Then, based on information of the amount of transmission packet data that is newly storable in buffer 107 where the information is input from HS-DSCH/FP processing section 108, RLC processing section 106 multiplexes the selected transmitted packet data and transmission packet data newly input from the radio network control (RNC) apparatus to output to MAC-d processing section 105 at a predetermined transfer rate.

Meanwhile, when a retransmission request is not transmitted from the mobile terminal apparatus, based on the information of the amount of transmission packet data that is newly storable in buffer 107 input from HS-DSCH/FP processing section 108, the RLC processing section 106 multiplexes only the new transmission packet data to output to MAC-d processing section 105. In addition, details of RLC processing section 106 will be described later.

Buffer 107 that is storing means temporarily stores the transmission packet data input from MAC-d processing section 105, and outputs transmission packet data of timing and the amount of data corresponding to the result of scheduling in scheduling section 104 to radio layer 1 processing section 102. Further, buffer 107 is set for an upper limit threshold and lower limit threshold to compare with a amount of data stored of transmission packet data, and outputs a result of comparison between the amount of data stored and the upper limit threshold or between the amount of data stored and the lower limit threshold to HS-DSCH/FP processing section 108 as the amount of data stored information.

HS-DSCH/FP processing section 108 that is data amount control means extracts TFRI (Transport-format and Resource related Information) that is information on resource allocation from the CQI input from CQI extracting section 103, and detects the receivable data amount of the communication terminal apparatus. Further, HS-DSCH/FP processing section 108 outputs a message to resume transmission or another message to halt transmission to RLC processing section 106, using the result of comparison of the amount of data stored with the upper limit threshold or lower limit threshold input from buffer 107. Furthermore, HS-DSCH/FP processing section 108 determines the amount of transmission packet data (multiplexing data amount) to newly store in buffer 107, from the amount of data stored information of transmission packet data stored in buffer 107 input from buffer 107 and the receivable data amount in the communication terminal apparatus, and outputs the determined amount of transmission packet data information to RLC processing section 106 together with the message to resume transmission. In addition, details of HS-DSCH/FP processing section 108 will be described later.

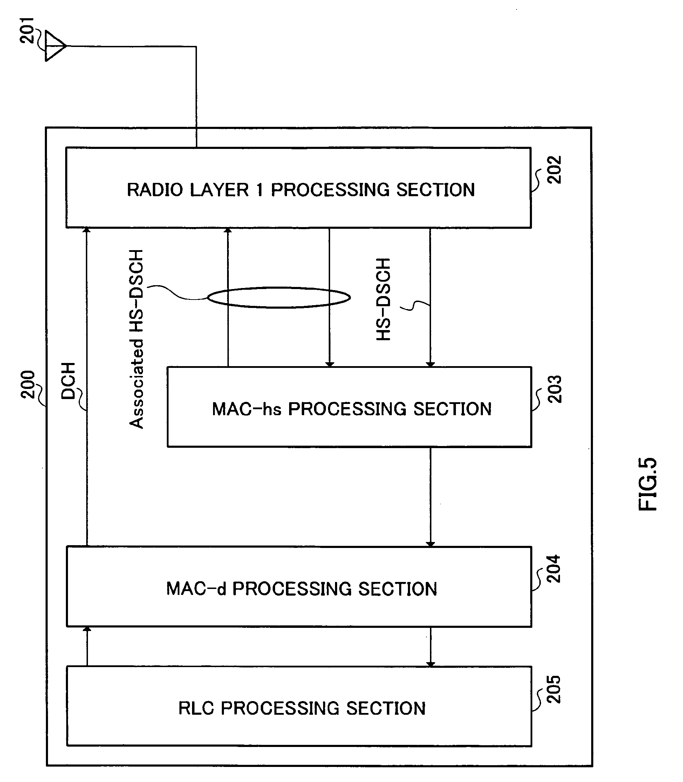

A configuration of communication terminal apparatus 200 according to Embodiment 1 of the invention will be described below with reference to FIG. 5. FIG. 5 is a block diagram illustrating the configuration of communication terminal apparatus 200 that is a communicating party of base station apparatus 100 according to Embodiment 1 of the invention.

Radio layer 1 processing section 202 performs radio signal processing on a received signal received in antenna 201 to output to MAC-hs processing section 203. Further, radio layer 1 processing section 202 performs radio signal processing on a transmission signal including a CQI, retransmission request signal and the like input from MAC-d processing section 204 to transmit from antenna 201.

MAC-hs processing section 203 performs MAC-hs processing on the received signal input from radio layer 1 processing section 202. In other words, MAC-hs processing section 203 extracts the scheduling information received from the base station apparatus, and instructs MAC-d processing section 204 to transmit data according to the extracted scheduling information.

MAC-d processing section 204 performs MAC-d processing on the received signal input from MAC-hs processing section 203 to output to RLC processing section 205. Further, MAC-d processing section 204 performs MAC-d processing on the transmission signal input from RLC processing section 205, while adding a MAC-d header, and outputs the resultant to radio layer 1 processing section 202.

RLC processing section 205 has the function of controlling retransmission of data based on the retransmission control protocol, performs RLC processing on the received signal input from the MAC-d processing section, and judges whether or not the packet data requested for retransmission is received. Then, RLC processing section 205 outputs a retransmission request signal to MAC-d processing section 204 until the packet data requested for retransmission arrives.

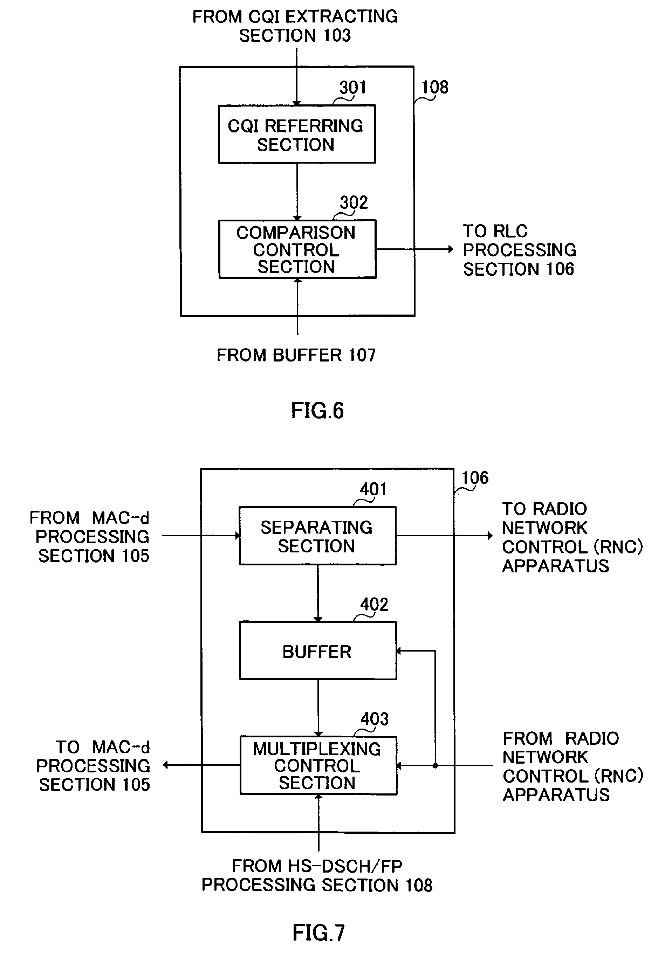

A configuration of HS-DSCH/FP processing section 108 will be described below with reference to FIG.6. FIG.6 is a block diagram illustrating the configuration of HS-DSCH/FP processing section 108.

CQI referring section 301 stores in a reference table the receivable data amount information (reception quality information) which associates CQI with a receivable data amount of the communication terminal apparatus and which is the same as that in the communication terminal apparatus . By referring to the reference table using the CQI input from CQI extracting section 103, CQI referring section 301 is able to recognize the receivable data amount (TFRI) . Then, CQI referring section 301 outputs the recognized receivable data amount information to comparison control section 302.

When comparison control section 302 receives from buffer 107 the amount of data stored information indicating that the amount of data stored exceeds or equal to the upper limit threshold, comparison control section 302 outputs a capacity allocation message set for a value indicative of halting transmission to RLC processing section 106. Meanwhile, when comparison control section 302 receives from buffer 107 the amount of data stored information indicating that the amount of data stored (queue length) is less than or equal to the lower limit threshold, comparison control section 302 outputs a capacity allocation message set for a value indicative of resuming transmission to RLC processing section 106. Then, when comparison control section 302 receives from buffer 107 the amount of data stored information indicating that the amount of data stored is less than or equal to the lower limit threshold, comparison control section 302 obtains the amount of transmission packet data to newly store in buffer 107 such that the amount of data stored in buffer 107 is less than or equal to the receivable data amount from the receivable data amount information input from CQI referring section 301. Comparison control section 302 outputs the obtained amount of transmission packet data information to RLC processing section 106 together with the capacity allocation message set for a value indicative of resuming transmission.

A configuration of RLC processing section 106 will be described below with reference to FIG.7. FIG.7 is a block diagram illustrating the configuration of RLC processing section 106.

Separating section 401 outputs NACK to buffer 402, when the received signal input from MAC-d processing section 105 contains NACK that is a retransmission request signal. Further, separating section 401 outputs signals except the retransmission request signal to radio network control (RNC) apparatus not shown in the figure.

Buffer 402 stores new transmission packet data input from the radio network control (RNC) apparatus until a predetermined time elapses. When buffer 402 receives a report of NACK from separating section 401, buffer 402 selects transmission packet data reported as NACK from stored already-transmitted transmission packet data, as transmission packet data requested for retransmission, to output to multiplexing control section 403. Meanwhile, buffer 402 discards the stored transmission packet data when a predetermined time elapses without receiving a report of NACK from separating section 401.

Multiplexing control section 403 that is multiplexing means multiplexes the new transmission packet data input from the radio network control (RNC) apparatus and retransmission packet data requested for retransmission input from buffer 402 according to control of HS-DSCH/FP processing section 108. In other words, multiplexing control section 403 multiplexes preferentially transmission packet data requested for retransmission, and when the amount of data after multiplexing the transmission packet data requested for retransmission is less than the amount of transmission packet data instructed from HS-DSCH/FP processing section 108, multiplexes the new transmission packet data on the transmission packet data requested for retransmission. Meanwhile, when the communication terminal apparatus does not transmit a retransmission request, multiplexing control section 403 multiplexes only the new transmission packet data by the amount of transmission packet data instructed from HS-DSCH/FP processing section 108. Then, multiplexing control section 403 outputs multiplexed transmission packet data to MAC-d processing section 105.

In addition, the transmission packet data requested for retransmission is preferentially multiplexed when multiplexing control section 403 performs multiplexing, but the invention is not limited to such a case. When a communication terminal apparatus requests transmission of new transmission packet data earlier, multiplexing control section 403 may multiplex the new transmission packet data preferentially, and thus, priorities of multiplexing can be determined arbitrarily to the new transmission packet data and transmission packet data requested for retransmission.

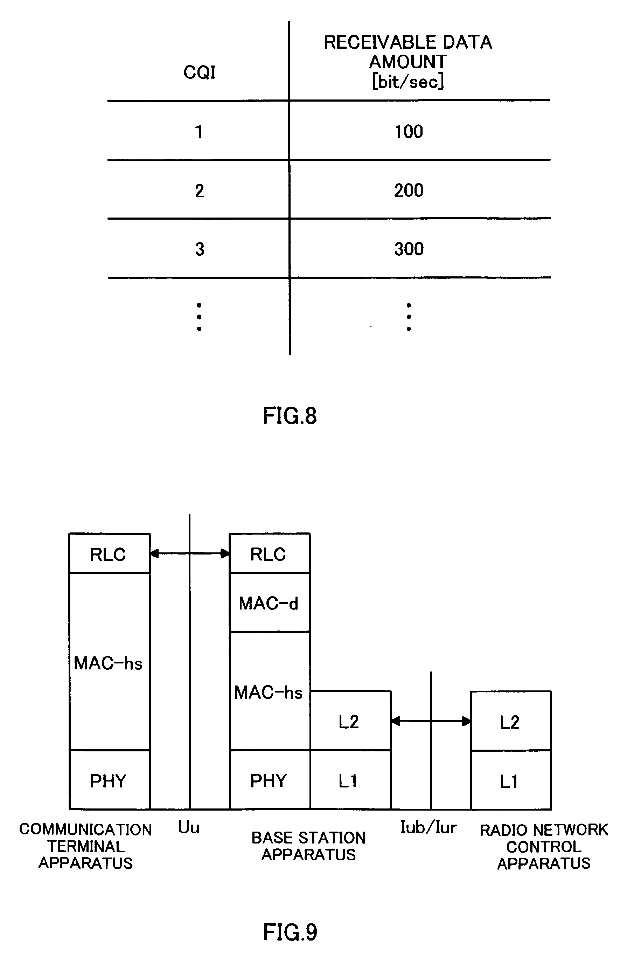

FIG.8 shows the reference table storing the receivable data amount information that associates CQI with the receivable data amount information.

From FIG. 8, the receivable data amount is 100 bit/sec when the CQI is "1", the receivable data amount is 200 bit/sec when the CQI is "2", and the receivable data amount is 300 bit/sec when the CQI is "3". In addition, the relationship between the CQI and receivable data amount only needs that the base station apparatus and communication terminal apparatus store the same receivable data amount information, and can be changed arbitrarily corresponding to then propagation environments or the like.

FIG.9 is a diagram of a protocol configuration of user plane in the communication system of the invention. FIG.9 differs from the conventional configuration in FIG.2 in the respect that MAC-d and RLC is provided in the base station apparatus.

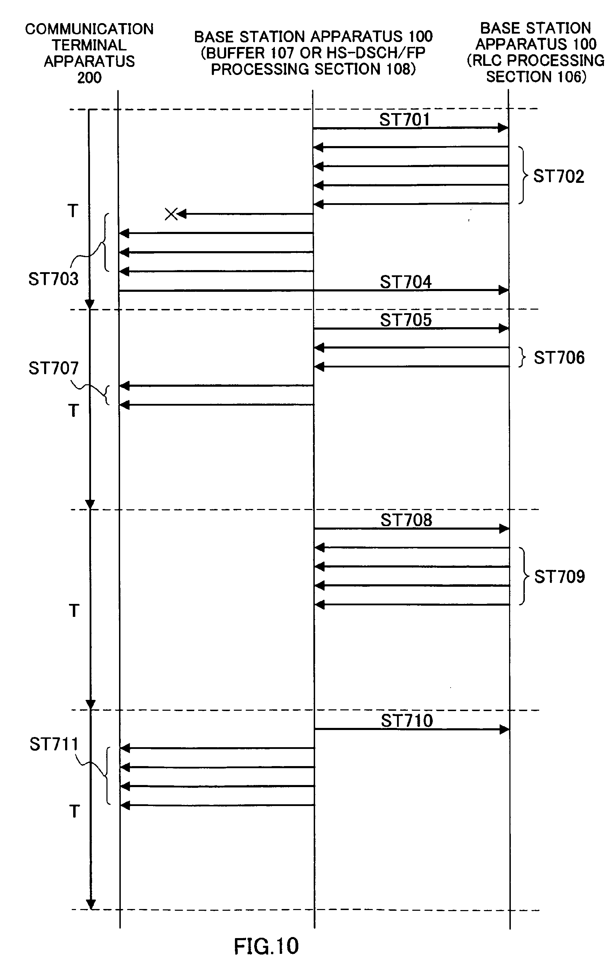

Referring to FIG.10, described below is the operation in the communication system for performing communications using base station apparatus 100, mobile terminal apparatuses 200 and the like. FIG.10 is an operation sequence diagram illustrating the operation in the communication system for performing communications using base station apparatus 100, mobile terminal apparatuses 200 and the like. In addition, in FIG.10, buffer 107 and RLC processing section 106 in the base station apparatus are provided in the same base station apparatus 100.

First, when HS-DSCH/FP processing section 108 in base station apparatus 100 confirms that the amount of data stored in buffer 107 of MAC-hs processing section 109 does not exceed the set lower limit threshold (the number of AMD-PDUs is "0") , HS-DSCH/FP processing section 108 outputs a capacity allocation message to permit transmission of new AMD-PDU to RLC processing section 106 (step ST701) . The capacity allocation message is to report the number of AMD-PDUs permitted to transmit for each transmission period T on a predetermined radio channel. In addition, it is assumed in FIG.9 that "4" is the maximum number of AMD-PDUs that can be transmitted within one transmission period T on the radio channel. However, the maximum number of AMD-PDUs that can be transmitted within one transmission period T is not limited to "4", and may be set at an arbitrary number.

RLC processing section 106 of base station apparatus 100 to which the number of AMD-PDUs allowed to be newly transmitted is reported outputs four AMD-PDUs,0~3, to buffer 107 (step ST702). At this point, the amount of data stored in buffer 107 becomes equal to the upper limit threshold (the number of AMD-PDUs is "4") , and HS-DSCH/FP processing section 108 instructs RLC processing section 106 to halt transmission.

MAC-hs processing section 109 fetches AMD-PDUs 0~3 from buffer 107 to transmit to communication terminal apparatus 200 (step ST703).

At this point, AMD-PDUO is discarded that is one of the four AMD-PDUs transmitted due to an error on the radio channel. In addition, in the case of HSDPA, the AMD-PDU targeted for discarding at this point is not saved even by performing retransmission by HARQ.

RLCprocessingsection205incommunicationterminal apparatus 200 transmits STATUS-PDUO set for a retransmission request for the discarded AMD-PDUO to RLC processing section 106 in base station apparatus 100 (step ST704 ) . However, at this point, RLC processing section 106 does not have permission to transmit a new AMD-PDU, and therefore, does not transmit AMD-PDUO requested to retransmit.

Next, since the amount of data stored in buffer 107 is less than or equal to the lower limit threshold, HS-DSCH/FP processing section 108 in base station apparatus 100 permits RLC processing section 106 to newly transmit two AMD-PDUs in consideration of the receivable data amount in communication terminal apparatus 200 (step ST705).

RLC processing section 106, the number of AMD-PDUs allowed to be newly transmitted is reported, outputs AMD-PDUO requested for retransmission and new different AMD-PDU4 to buffer 107 (step ST706).

MAC-hs processing section 109 fetches AMD-PDUO and AMD-PDU4 from buffer 107 to transmit to communication terminal apparatus 200 (step ST707). Thus, retransmission of AMD-PDUO that is discarded on the radio channel is completed.

Referring to FIG. 9, described below is the case where the number of AMD-PDUs allowed to be newly transmitted determined in HS-DSCH/FP processing section 108 in base station apparatus 100 is different from the number of AMD-PDUs that the apparatus 100 was able to actually transmit on the radio channel.

When the amount of data stored in buffer 107 is less than or equal to the lower limit threshold, HS-DSCH/FP processing section 108 in base station apparatus 100 permits RLC processing section 106 to newly transmit four AMD-PDUs in consideration of the receivable data amount in communication terminal apparatus 200 (step ST708). At this point, the amount of data stored in buffer 107 exceeds or equal to the upper limit threshold (the number of AMD-PDUs is "4"), HS-DSCH/FP processing section 108 in base station apparatus 100 instructs RLC processing section 106 to halt transmission.

Next, RLC processing section 106, to which the number of AMD-PDUs allowed to be newly transmitted is reported, outputs to buffer 107 new AMD-PDUs 5~8 (step ST709).

At this point, MAC-hs processing section 109 cannot transmit even one AMD-PDU due to an increase in the communication amount of other users, deterioration in radio channel state and the like, and stores four AMD-PDUs, 5~8, in buffer 107.

Then, even when HS-DSCH/FP processing section 108 receives the CQI enabling permission of transmission of four AMD-PDUs from MAC-hs processing section 109, since buffer 107 already stores AMD-PDUs not less than the upper limit threshold indicative of AMD-PDUs allowed to be transmitted for a transmission period of the radio channel, HS-DSCH/FP processing section 108 outputs a message not to permit RLC processing section 106 to transmit new AMD-PDUs to RLC processing section 106 (step ST710).

MAC-hs processing section 109 fetches AMD-PDU5~8 already stored in buffer 107 to transmit to communication terminal apparatus 200 (step ST711 ) . By this means, all the AMD-PDUs stored in buffer 107 have been transmitted, and the number of AMD-PDUs stored in buffer 107 becomes less than or equal to the lower limit threshold. Then, the operation of steps ST701 to ST711 is repeated subsequently. In addition, the lower limit threshold and upper limit threshold for the number of AMD-PDUs in buffer 107 are not limited respectively to "0" and "4", and may be set arbitrarily.

Thus, according to Embodiment 1, the base station apparatus controls the number of AMD-PDUs stored in the buffer by the HS-DSCH/FP processing section, and, when anAMD-PDU that cannot be transmitted due to deterioration in radio channel state and so forth is stored in the buffer, limits the storage of new transmission packet data retransmission of which is not requested in the buffer, and preferentially stores transmission packet data requested for retransmission in the buffer, thereby reducing the number of retransmission requests and improving throughput, and preventing disruption of communication and channel disconnection.

Further, according to Embodiment 1, it is possible in a base station apparatus to control whether or not to newly store data requested for retransmission, so that the amount of data stored in the buffer can be controlled promptly. Further, according to Embodiment 1, also in the case where retransmission is not requested, it is possible to control the amount of new transmission packet data stored in the buffer, thereby making it possible to prevent transmission packet data from being discarded from the buffer due to overflow when the transmission rate decreases due to deterioration in radio channel or the like.

### (Embodiment 2)

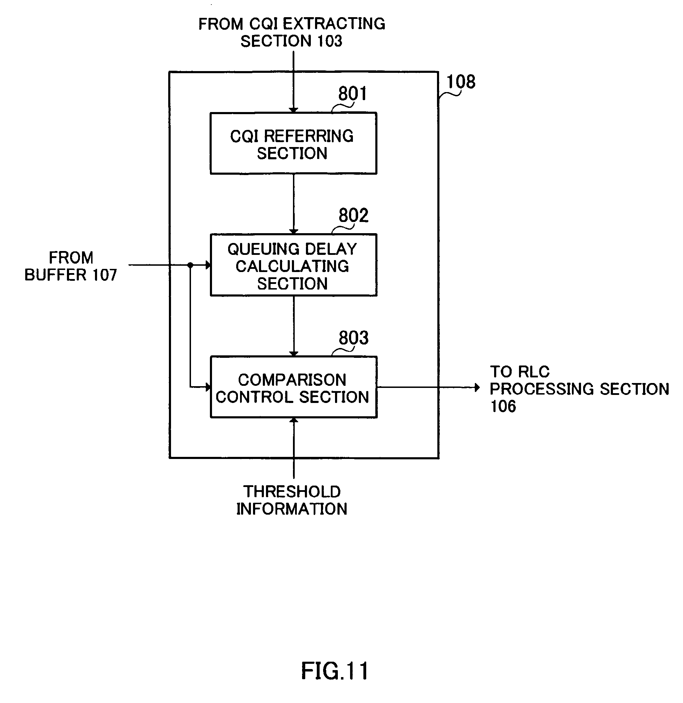

FIG.11 is a block diagram illustrating a configuration of HS-DSCH/FP processing section 108 in a base station apparatus according to Embodiment 2 of the invention. In addition, configurations of the base station apparatus and communication terminal apparatus are the same as in FIGs . 4 and 5 except threshold information input to HS-DSCH/FP processing section 108, and descriptions thereof are omitted.

CQI referring section 802 stores in the reference table the same transmission data rate information (reception quality information) associating the CQI with the transmission data rate as that in the communication terminal apparatus. CQI referring section 801 refers to the reference table using the CQI input from CQI extracting section 103, and is thereby capable of detecting the transmission data rate (TFRI). Then, CQI referring section 801 outputs detected transmission data rate information to queuing delay calculating section 802.

Queuing delay calculating section 802 calculates queuing delay time from the transmission data rate information input from CQI referring section 801 and the amount of data stored information of transmission packet data in buffer 107 input from buffer 107. The queuing delay time is calculated by dividing the amount of data stored by the transmission data rate. Then, queuing delay calculating section 802 outputs the information of the calculated queuing delay time to comparison control section 803.

When comparison control section 803 receives from buffer 107 the amount of data stored information indicating that the amount of data stored exceeds or equal to the upper limit threshold, comparison control section 803 outputs a capacity allocation message set for a value indicative of halting transmission to RLC processing section 106. Meanwhile, when comparison control section 803 receives from buffer 107 the amount of data stored information indicating that the amount of data stored (queue length) is less than or equal to the lower limit threshold, comparison control section 803 outputs a capacity allocation message set for a value indicative of resuming transmission to RLC processing section 106. Then, using the queuing delay time information input from queuing delay calculating section 802, comparison control section 803 controls supply amounts to RLC processing section 106 of transmission packet data retransmission of which is requested and new transmission packet data retransmission is not requested. The threshold to compare with the queuing delay time in comparison control section 803 is set at a value smaller than Timer_Status_Prohibit (retransmission request transmission time) that is the time elapsed between the time the communication terminal apparatus requests retransmission and the time the communication terminal apparatus requests again retransmission when retransmitted transmission packet data retransmission of which was requested cannot be received. In addition, the operation in the communication system for performing communications using base station apparatus 100, communication terminal apparatuses 200 and the like is the same as in FIG. 9, and descriptions thereof are omitted.

Thus, in addition to the advantage of Embodiment 1, according to Embodiment 2, the amount of storage in the buffer is controlled for both transmission packet data requested for retransmission and new transmission packet data not requested for retransmission such that the queuing delay time of the transmission packet data retransmission of which is requested stays above the value of Timer_Status_Prohibit, thereby making it possible to dependably reduce the number of retransmission requests.

### (Embodiment 3)

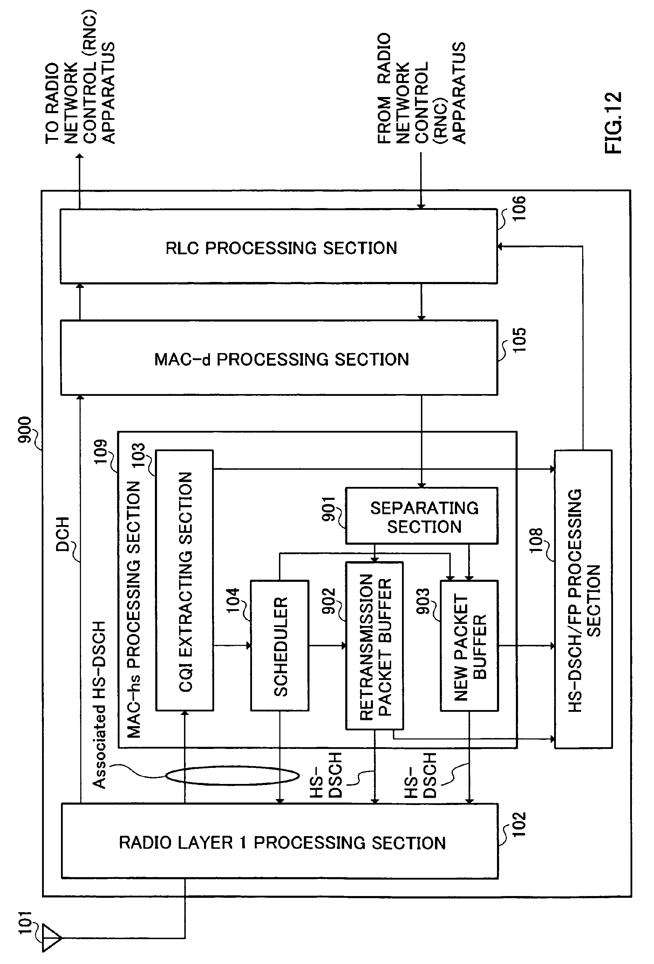

FIG.12 is a block diagram illustrating a configuration of base station apparatus 900 according to Embodiment 3 of the invention. As shown in FIG.12, base station apparatus 900 according to Embodiment 3 has separating section 901, and retransmission packet buffer 902 and new packet buffer 903 as a substitute for buffer 107 in base station apparatus 100 according to Embodiment 1 as shown in FIG.4. In addition, in FIG.12, the same structural elements as in FIG.4 are assigned same reference numerals to omit descriptions thereof. A configuration of a communication terminal apparatus is the same as that in FIG.5, and descriptions thereof are omitted.

Scheduler 104 holds a reference table storing modulation scheme information that associates a modulation scheme such as 16QAM with CQI, and another reference table storing coding rate information that associates a coding rate with CQI. Each of the base station and communication terminal apparatuses has the same reference table storing the modulation scheme information and the same reference table storing the coding rate information. Then, scheduler 104 refers to the reference tables using the CQI input from CQI extracting section 103, thereby determines transmission parameters such as a modulation scheme and coding rate, and further determines a communication terminal apparatus to which packet data is transmitted on a predetermined time basis. Scheduler 104 outputs thus determined scheduling information of transmission parameters and the like to retransmission packet buffer 902, new packet buffer 903 and radio layer 1 processing section 102. At this point, scheduler 104 performs scheduling such that transmission packet data, retransmission of which is requested, stored in retransmission packet buffer 902 is output to radio layer 1 processing section 102 with a higher priority than new transmission packet data stored in new packet buffer 903.

Separating section 901 separates the transmission packet data retransmission of which is requested and new transmission packet data input from MAC-d processing section 105, and outputs the transmission packet data retransmission of which is requested to retransmission packet buffer 902, while further outputting the new transmission packet data to new packet buffer 903.

Retransmission packet buffer 902 temporarily stores the transmission packet data, retransmission of which is requested, input from separating section 901, and outputs transmission packet data of timing and the amount of data corresponding to the result of scheduling in scheduling section 104 to radio layer 1 processing section 102. Further, retransmission packet buffer 902 is set for an upper limit threshold and lower limit threshold to compare with a amount of data stored of transmission packet data, and outputs the result of comparison between the amount of data stored and the upper limit threshold or between the amount of data stored and the lower limit threshold to HS-DSCH/FP processing section 108 as the amount of data stored information.

New packet buffer 903 temporarily stores the new transmission packet data input from separating section 901, and outputs transmission packet data of timing and the amount of data corresponding to a result of the scheduling in scheduling section 104 to radio layer 1 processing section 102.Further, new packet buffer 903 is set for an upper limit threshold and lower limit threshold to compare with a amount of data stored of new transmission packet data, and outputs a result of comparison between the amount of data stored and the upper limit threshold or between the amount of data stored and the lower limit threshold to HS-DSCH/FP processing section 108 as the amount of data stored information.

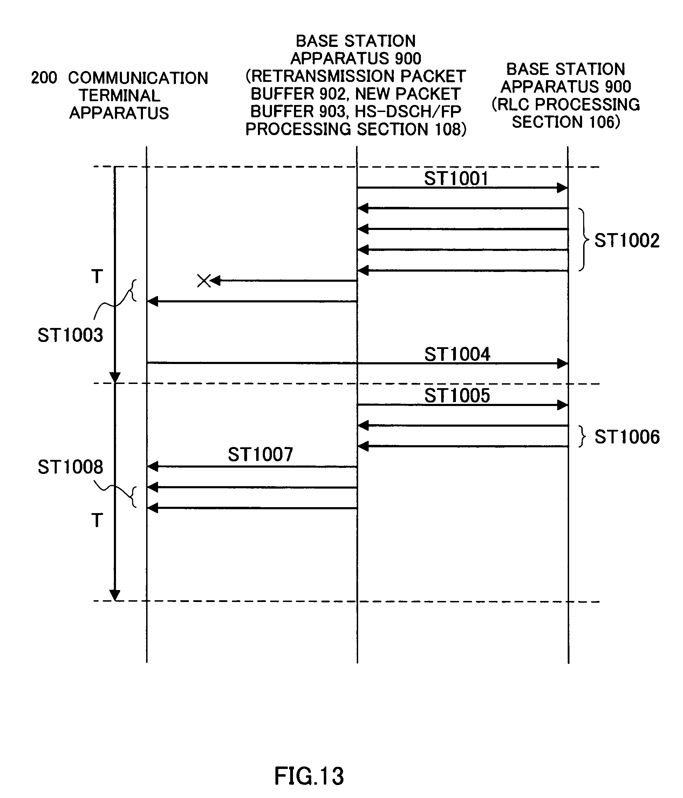

Referring to FIG.13, described below is the operation in the communication system for performing communications using base station apparatus 900, mobile terminal apparatuses 200 and the like. FIG.13 is an operation sequence diagram illustrating the operation in the communication system for performing communications using base station apparatus 900, mobile terminal apparatuses 200 and the like. In addition, in FIG. 13, retransmission packet buffer 902, new packet buffer 903, HS-DSCH/FP processing section 108 and RLC processing section 106 in the base station apparatus are provided in the same base station apparatus 900.

First, when HS-DSCH/FP processing section 108 in base station apparatus 900 confirms that the amount of data stored in retransmission packet buffer 902 and the amount of data stored in new packet buffer 903 of MAC-hs processing section 109 are less than or equal to the set lower limit threshold (the number of AMD-PDUs is "2"), HS-DSCH/FP processing section 108 outputs a capacity allocation message to permit transmission of new AMD-PDU to RLC processing section 106 (step ST1001). In addition, it is assumed in FIG.13 that "4" is the maximum number of AMD-PDUs that can be transmitted within one transmission period T on the radio channel. However, the maximum number of AMD-PDUs that can be transmitted within one transmission period T is not limited to "4", and may be set at an arbitrary number.

RLC processing section 106 of base station apparatus 900, to which the number of AMD-PDUs allowed to be newly transmitted is reported, outputs to new packet buffer 903 four AMD-PDUs 0~3, (step ST1002). At this point, since transmission packet data to retransmit does not exist because a retransmission request is not transmitted from communication terminal apparatus 200, all the transmission packet data is stored in new packet buffer 903. Then, the amount of data stored in new packet buffer 903 becomes more than or equal to the upper limit threshold (the number of AMD-PDUs is "4") , and HS-DSCH/FP processing section 108 instructs RLC processing section 106 to halt transmission.

MAC-hs processing section 109 fetches AMD-PDUs 0,1 from new packet buffer 903 by instruction from scheduler 104 to transmit to communication terminal apparatus 200 (step ST1003).

At this point, AMD-PDUO is discarded that is one of two AMD-PDUs transmitted due to an error on the radio channel. In addition, in the case of HSDPA, an AMD-PDU targeted for discarding at this point is not saved even by performing retransmission by HARQ.

RLC processing section 205 in communication terminal apparatus 200 transmits STATUS-PDUO set for a retransmission request for the discarded AMD-PDUO to RLC processing section 106 inbase station apparatus 900 (step ST1004). However, at this point, RLC processing section 106 does not have permission to transmit a new AMD-PDU, and does not transmit AMD-PDUO requested to retransmit.

Next, since the amount of data stored in retransmission packet buffer 902 and the amount of data stored in new packet buffer 903 are less than or equal to the lower limit threshold, HS-DSCH/FP processing section 108 in base station apparatus 900 permits RLC processing section 106 to newly transmit two AMD-PDUs in consideration of the receivable data amount in communication terminal apparatus 200 (step ST1005).

RLC processing section 106, the number AMD-PDUs allowed to be newly transmitted is reported, outputs AMD-PDUO retransmission of which is retransmitted and new different AMD-PDU4. Then, separating section 901 outputs AMD-PDU0 retransmission of which is retransmitted to retransmission packet buffer 902, and retransmission packet buffer 902 stores AMD-PDU0. Further, separating section 901 outputs new transmission packet data AMD-PDU4 to new packet buffer 903, and new packet buffer 903 stores AMD-PDU4 (step ST1006).

Next, scheduler 104 causes the transmission packet data requested for retransmission and stored in retransmission packet buffer 902 to be preferentially output and transmitted to communication terminal apparatus 200 (step ST1007) , and then, causes AMD-PDUs 2, 3 that cannot be transmitted before retransmission is requested to be output and transmitted to communication terminal apparatus 200 (step ST1008).

Thus, in addition to the advantage of Embodiment 1, according to Embodiment 3, transmission packet data requested for retransmission and new transmission packet data are separately stored, thus making it possible to always transmit the transmission packet data requested for retransmission earlier and reduce the delay of the transmission packet data requested for retransmission.

In addition, in Embodiment 3, HS-DSCH/FPprocessing section 108 may control the number of AMD-PDUs using the amount of data stored in retransmission packet buffer 902, the amount of data stored in new packet buffer 903, and the receivable data amount of communication terminal apparatus 200, as in Embodiment 1, or HS-DSCH/FP processing section 108 may control the number of AMD-PDUs using the amount of data stored in retransmission packet buffer 902, the amount of data stored in new packet buffer 903, and queuing delay time, as in Embodiment 2.

With Embodiments 1 to 3, it may be possible to implement the operation process of the base station apparatus and transmission method with a computer program and execute the computer program on a computer. Further, it may be possible to store the computer program implementing the operation process of the base station apparatus and transmission method in a storage medium such as CD-ROM and DVD, or transmit the computer program implementing the operation process of the base station apparatus and transmission method to a computer using an electric communication channel and execute the transmitted computer program using the transmission-destination computer.

As described above, according to the present invention, by controlling the amount of transmission packet data requested for retransmission stored in a buffer, it is possible to reduce the number of retransmissions, improve throughput, and prevent disruption in communication and channel disconnection.

This application is based on Japanese Patent Application No.2003-276974, filed on July 18, 2003, the entire content of which is expressly incorporated by reference herein.

### Industrial Applicability

The present invention relates to a base station apparatus and transmission method, and is particularly suitable for use in a base station apparatus and transmission method using an automatic repeat request system to recover a loss of a packet on a radio channel by retransmission of the packet.

## Claims

1. A base station apparatus comprising:
a multiplexer that, when retransmission is requested from a communicating party, multiplexes retransmission packet data requested for retransmission and new transmission packet data not requested for retransmission;
a data amount controller that adjusts an amount of multiplexing data between the retransmission packet data and the new transmission packet data in the multiplexer based on reception quality information of the communicating party contained in a received signal;
a storage that temporarily stores the retransmission packet data and the new transmission packet data multiplexed in the multiplexer; and
a transmitter that transmits to the communicating party the new transmission packet data and the retransmission packet data stored in the storage.

2. The base station apparatus according to claim 1, wherein when the retransmission packet data is stored in the storage, the transmitter transmits said retransmission packet data with a higher priority than the new transmission packet data to transmit.

3. The base station apparatus according to claim 1, wherein the data amount controller stores receivable data amount information that associates the reception quality information with a receivable data amount in the communicating party and that is shared with the communicating party, detects the receivable data amount by referring to the receivable data amount information using the reception quality information, and adjusts the multiplexing data amount so that the amount of data stored of the retransmission packet data and the new transmission packet data in the storage is less than or equal to the receivable data amount.

4. The base station apparatus according to claim 1, wherein the data amount controller stores transmission data rate information that associates the reception quality information with a receivable transmission data rate in the communicating party and that is shared with the communicating party, detects the transmission data rate by referring to the transmission data rate information using the reception quality information, calculates queuing delay time in the storage from the transmission data rate detected and the amount of data stored of the retransmission packet data and the new transmission packet data in the storage, and adjusts the multiplexing data amount so that the queuing delay time is less than or equal to a predetermined threshold.

5. The base station apparatus according to claim 4, wherein the threshold is set at a value smaller than retransmission request transmission time elapsed between the time the communicating party requests the retransmission and the time the communicating party requests again the retransmission when the retransmission packet data requested for retransmission is not received.

6. A transmission method comprising: multiplexing retransmission packet data requested for retransmission and new transmission packet data not requested for retransmission when retransmission is requested from a communicating party;
adjusting a multiplexing data amount of the retransmission packet data and the new transmission packet data to be multiplexed in the multiplexer based on reception quality information of the communicating party contained in a received signal;
storing temporarily the retransmission packet data and the new transmission packet data multiplexed; and
transmitting the new transmission packet data and the retransmission packet data stored in the storage to the communicating party.

7. A program for executing the process of:
multiplexing retransmission packet data requested for retransmission and new transmission packet data not requested for retransmission when retransmission is requested from a communicating party;
adjusting a multiplexing data amount of the retransmission packet data and the new transmission packet data to be multiplexed based on reception quality information of the communicating party contained in a received signal;
storing temporarily the retransmission packet data and the new transmission packet data multiplexed; and
transmitting the new transmission packet data and the retransmission packet data stored in the storage to the communicating party.

## Amended claims

### Amended claims under Art. 19.1 PCT

**1.** (Amended) A base station apparatus comprising:
a multiplexer that, when retransmission is requested from a communicating party, multiplexes retransmission packet data requested for retransmission and new transmission packet data not requested for retransmission;
a storage that temporarily stores the retransmission packet data and the new transmission packet data multiplexed in the multiplexer;
a data amount controller that stores receivable data amount information that associates reception quality information of the communicating party contained in a received signal with a receivable data amount in the communicating party and that is shared with the communicating party, detects the receivable data amount by referring to the receivable data amount information using the reception quality information, and adjusts an amount of multiplexing data between the retransmission packet data and the new transmission packet data in the multiplexer so that the amount of the retransmission packet data and the new transmission packet data stored in the storage is less than or equal to the receivable data amount detected; and
a transmitter that transmits the new transmission packet data and the retransmission packet data stored in the storage to the communicating party.

**2.** (Amended) A base station apparatus comprising:
a multiplexer that, when retransmission is requested from a communicating party, multiplexes retransmission packet data requested for retransmission and new transmission packet data not requested for retransmission;
a storage that temporarily stores there transmission packet data and the new transmission packet data multiplexed in the multiplexer;
a data amount controller that stores transmission data rate information that associates reception quality information of the communicating party contained in a received signal with a receivable transmission data rate in the communicating party and that is shared with the communicating party, detects the transmission data rate by referring to the transmission data rate information using the reception quality information, calculates queuing delay time in the storage from the transmission data rate detected and the amount of the retransmission packet data and the new transmission packet data stored in the storage, and adjusts an amount of multiplexing data between the retransmission packet data and the new transmission packet data in the multiplexer so that the amount of the retransmission packet data and the new transmission packet data stored in the storage is less than a predetermined threshold value; and
a transmitter that transmits the new transmission packet data and the retransmission packet data stored in the storage to the communicating party.

**3.** (Amended) The base station apparatus according to claim 2, wherein the threshold is set at a value smaller than retransmission request transmission time elapsed between the time the communicating party requests the retransmission and the time the communicating party requests again the retransmission when the retransmission packet data requested for retransmission is not received.

**4.** (Amended) A transmission method comprising:
multiplexing retransmission packet data requested for retransmission and new transmission packet data not requested for retransmission when retransmission is requested from a communicating party;
storing temporarily the retransmission packet data and the new transmission packet data multiplexed in a buffer;
storing receivable data amount information that associates reception quality information of the communicating party contained in a received signal with a receivable data amount in the communicating party and that is shared with the communicating party, detecting the receivable data amount by referring to the receivable data amount information using the reception quality information, adjusting and an amount of multiplexing data between the retransmission packet data and the new transmission packet data so that the amount the retransmission packet data and the new transmission packet data in the buffer is less than or equal to the receivable data amount detected; and
transmitting the new transmission packet data and the retransmission packet data stored in the buffer to the communicating party.

**5.** (Amended) A transmission method comprising:
multiplexing retransmission packet data requested for retransmission and new transmission packet data not requested for retransmission when retransmission is requested from a communicating party;
storing temporarily the retransmission packet data and the new transmission packet data multiplexed in a buffer;
storing transmission data rate information that associates reception quality information of the communicating party contained in a received signal with a receivable transmission data rate in the communicating party and that is shared with the communicating party, detecting the transmission data rate by referring to the transmission data rate information using the reception quality information, calculating queuing delay time in the buffer from the transmission data rate detected and the amount of the retransmission packet data and the new transmission packet data stored in the buffer, and adjusting an amount of multiplexing data between the retransmission packet data and the new transmission packet data so that the queuing delay time is less than or equal to a predetermined threshold; and
transmitting the new transmission packet data and the retransmission packet data stored in the buffer to the communicating party.

**6.** (Amended) A program for executing the process of:
multiplexing retransmission packet data requested for retransmission and new transmission packet data not requested for retransmission when retransmission is requested from a communicating party;
storing temporarily the retransmission packet data and the new transmission packet data multiplexed in a buffer;
storing receivable data amount information that associates reception quality information of the communicating party contained in a received signal with a receivable data amount in the communicating party and that is shared with the communicating party, detecting the receivable data amount by referring to the receivable data amount information using the reception quality information, and adjusting an amount of multiplexing data between the retransmission packet data and the new transmission packet data so that the amount of the retransmission packet data and the new transmission packet data stored in the buffer is less than or equal to the receivable data amount detected; and
transmitting the new transmission packet data and the retransmission packet data stored in the buffer to the communicating party.

**7.** (Amended) A program for executing the process of:
multiplexing retransmission packet data requested for retransmission and new transmission packet data not requested for retransmission when retransmission is requested from a communicating party storing temporarily the retransmission packet data and the new transmission packet data multiplexed in a buffer;
storing transmission data rate information that associates reception quality information of the communicating party contained in a received signal with a receivable transmission data rate in the communicating party and that is shared with the communicating party, detecting the transmission data rate by referring to the transmission data rate information using the reception quality information, calculating queuing delay time in the buffer from the transmission data rate detected and a amount of data stored of the retransmission packet data and the new transmission packet data in the buffer, and adjusting an amount of multiplexing data between the retransmission packet data and the new transmission packet data so that the queuing delay time is less than or equal to a predetermined threshold; and
transmitting the new transmission packet data and the retransmission packet data stored in the buffer to the communicating party.
